Europäisches Patentamt

European Patent Office

Office européen des brevets

(19)

(11) Publication number: **0 211 961**
**A1**

# EUROPEAN PATENT APPLICATION

published in accordance with Art. 158(3) EPC

(21) Application number: 86901489.4

(22) Date of filing: 14.02.86

Data of the international application taken as a basis:

(86) International application number:
**PCT/JP 86/00068**

(87) International publication number:
**WO 86/05051 (28.08.86 86/19)**

(51) Int. Cl.⁴: **H 04 B 1/59**, G 01 S 13/76

(30) Priority: 15.02.85 JP 28876/85

(43) Date of publication of application: 04.03.87
**Bulletin 87/10**

(84) Designated Contracting States: FR

(71) Applicant: **TOYO COMMUNICATION EQUIPMENT CO.,LTD., 753, Koyato, Samukawa-machi, Koza-gun Kanagawa 253-01 (JP)**

(72) Inventor: **MATSUNAGA, Masaharu, 403, 2-toh, Tsurugadai 15-gaiku, Chigasaki-shi Kanagawa-ken 253 (JP)**

(74) Representative: **Moncheny, Michel et al, c/o Cabinet Lavoix 2 Place d'Estienne d'Orves, F-75441 Paris Cedex 09 (FR)**

(54) **SYSTEM FOR DISCRIMINATING PULSES SUCH AS RESPONSE SIGNALS IN A TRANSPONDER.**

(57) A system for detecting and discriminating a plurality of data pulse trains that arrive being overlapped in terms of time in a transponder or the like. A plurality of pulse decoder circuits (1), (2) are provided to correspond to pulse trains that arrive being overlapped. Each decoder circuit is provided with trains of gates (FF₁)–(FF₁₃), (FF₁₄)–(FF₂₆) that open for only an allowable jitter time determined by a delay circuit (DL₂). One gate train (FF₁)–(FF₁₃) permits only a pulse train that has arrived first to pass through among the trains of pulses arriving overlapped. Another gate train (FF₁₄)–(FF₂₆) permits only another pulse train that has arrived delayed to pass through.

SPECIFICATION

PULSE DISCRIMINATING SYSTEM FOR ANSWER SIGNAL
AND THE LIKE IN TRANSPONDER

TECHNICAL FIELD

This invention relates to a pulse discriminating system for answer signals and the like in transponders, and more particularly to a pulse discriminating system for answer signals and the like which can discriminate independently and correctly respective pulse trains in the case where a plurality of answer signals are overlapped each other from viewpoint of time in on-board transponder in aircraft.

PRIOR ART

In general, for facility of air traffic control, principal aircraft are loaded with transponder and when interrogation signal delivered from a ground control system and the like is received by such aircraft, they send back prescribed information such as    its    identity,              altitude and the like.

In particular case, similar information is exchanged in also aircraft with each other. One example of signal handled in such transponder as described above is as illustrated in Fig. 3 which shows an example of transponder answer signal in so-called mode C wherein 15 pulses at the maximum each having a width of 0.45 us are arranged with its leading edge of 1.45 us.

- 1 -

Among them, the first and last pulses $F_1$ and $F_2$ are referred to as bracket pulses (BKT) and they are fixed. An interval between these BKT pulses $F_1$ and $F_2$ is 20.3 us, and 13 pulses $C_1$, $A_1$, $A_2$, ..., $D_4$ are arranged between the former pulses as shown in Fig. 3. Logic "1" or "0" is assigned in response to the presence of pulses at the respective positions to encode advanced information and the like to display them.

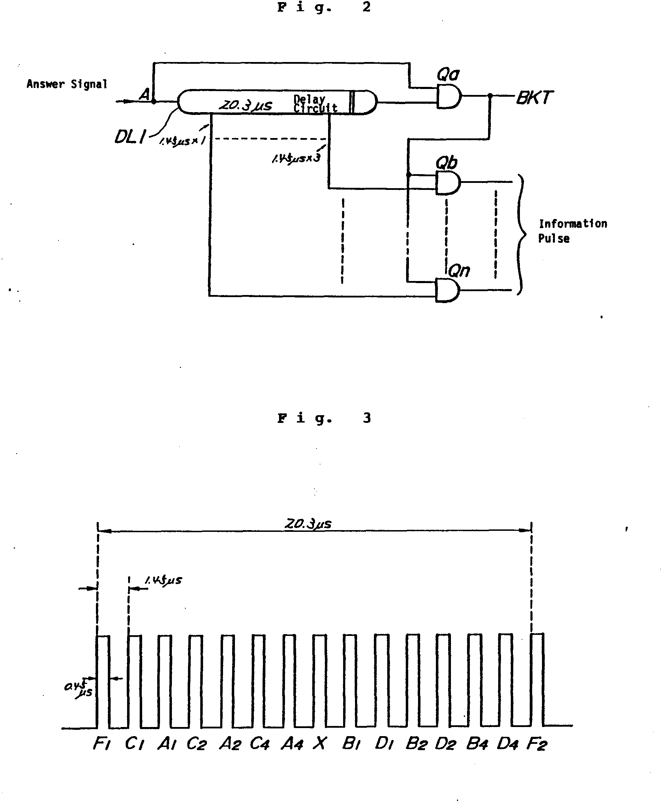

In case of decoding information signal which has been encoded by means of such pulse train, it is required that the presence of pulse at the respective positions is detected. In this connection, heretofore, a pulse discriminating circuit to be used for the above case has generally been constructed from a 20.3 us delay circuit $DL_1$ and a required number of AND circuits (AND gates) as shown in Fig. 2.

More specifically, two types of signal one of which is answer signal itself and the other is such answer signal which has been delayed by 20.3 us by causing the former to pass through said delay circuit $DL_1$ are inputted to an AND circuit (AND gate) $Q_2$ to obtain BKT as their AND output and, at the same time, to input each output obtained from thirteen taps provided in said delay circuit $DL_1$ and delayed by 1.45 us in a tap into each one input terminal of total thirteen AND gates $Q_b$ to $Q_n$, respectively, whilst BKT (bracket pulse) being output of said AND gate $Q_a$ is inputted to each of the other input terminal, whereby discriminated thirteen information pulses are output at the output ends of these AND gates $Q_b$ to $Q_n$.

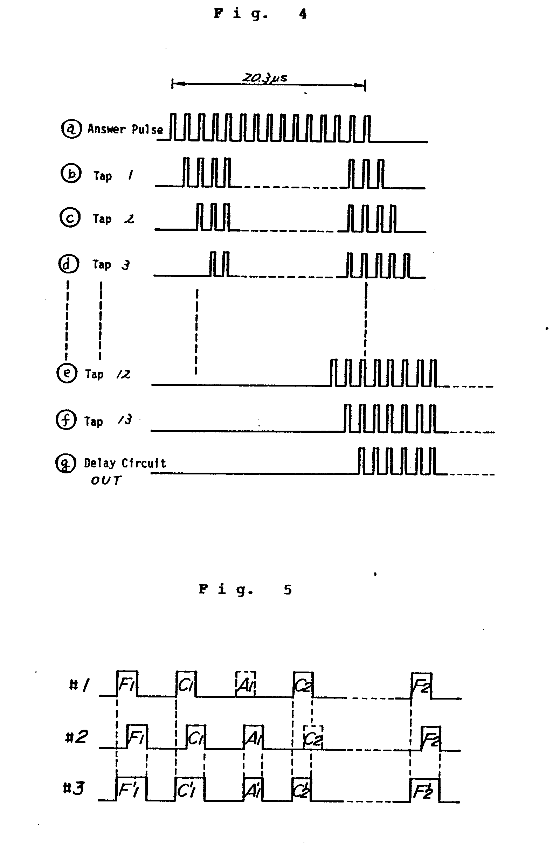

In order to facilitate understanding of the present invention, operation in the above-mentioned circuit construction shown in Fig. 2 will be described in detail hereinbelow by referring to a timing chart shown in Fig. 4.

The timing chart consisting of Fig. 4(a) through (o) indicates timing relationship of input and output of the delay circuit $DL_1$ in Fig. 2 as well as pulses to be output to the respective taps wherein (a) designates input signal, (b) through (n) thirteen tap outputs derived from with each 1.45 us delay interval, and (o) output signal at the output end of said delay circuit $DL_1$, respectively.

First, since AND of pulse trains indicated by Fig. 4(a) and (o) is obtained in the first AND gate $Q_a$, pulse output having 0.45 us width, i.e., BKT pulse is output as the AND of both the last pulse at (a), i.e., $F_2$ and the first pulse delayed by 20.3 us at (o), i.e., $F_1$. Such $F_1$ and $F_2$ are positively present as bracket pulse as mentioned above, so that output "1" is inevitably obtained in the output of said AND gate $Q_a$.

Next, the BKT pulse is inputted to each of the other thirteen input ends of from the second AND gate $Q_b$ to the fourteenth AND gate $Q_n$. For example, these AND gates function in such that the AND gate $Q_b$ outputs AND derived from said BKT pulse and the second pulse shown in Fig. 4(n), i.e., $C_1$ pulse, further the AND gate $Q_c$ outputs AND of the BKT pulse and the third pulse indicated in Fig. 4(m), i.e., $A_1$ pulse, and the AND gate $Q_d$ outputs AND derived from the fourth pulse indicated in Fig. 4($\ell$), i.e., $C_2$ pulse. Thus, when found AND of such pulses

- 3 -

which have been successively delayed as described above and the BKT, a pulse train delivered successively in every 1.45 μs time interval in accordance with time serial manner is obtained as parallel pulse signal after delaying time interval of 20.3 μs. As a result, "1" is obtained if a pulse exists in respective pulse positions and if not, "0" is obtained at the respective AND gates so that information delivered from a transmitter can be discriminated and reproduced.

In such conventional pulse discriminating method as mentioned above. however, when a plurality of answer signals are in       garble,            , they cannot be discriminated, besides there is a fear of erroneous decoding.

Namely, such a case where there are two answer signals #1 and #2 with a little time difference therebetween is taken as an example as shown in Fig. 5, these two signal pulses are received as the sum of both the pulses as indicated in Fig. 5 #1 + #2.

Hence, there is such a problem that when the signal as described above is decoded    by the use of said conventional discriminating circuit, AND signal based on #1 + #2 signals is output, but such AND signal is quite different from that derived from said #1 and #2 pulse trains so that this becomes a cause of erroneous decoding.

Accordingly, the present invention has been made to eliminate the problems involved in the pulse discriminating system for answer signals and the like in the conventional transponders as described above. and an object of the present

- 4 -

invention is to provide a pulse discriminating system for answer signals and the like in transponders.

DISCLOSURE OF THE INVENTION

According to the present invention, only such pulse trains belonging to a first incoming signal from the viewpoint of time among a plurality of signals are discriminated through a gate circuit which opens only for a prescribed period of time by means of the reference pulse of said first incoming signal, thereafter only each information pulse belonging to another incoming signal delayed a little from said first or the following incoming signal is discriminated through another gate circuit which opens only for a prescribed period of time by means of said information pulse. and at the same time each period of time for opening said respective gate circuits is set in relation to allowable jitter of each information pulse, whereby respective pulse trains can be independently and correctly discriminated in the case where a plurality of answer signals are  in garble.

BRIEF DESCRIPTION OF THE DRAWINGS

Fig. 1A and Fig. 1B are a circuit diagram illustrating an embodiment of the pulse signal discriminating circuit according to the present invention and a timing chart for explaining the operation thereof, respectively;

Fig. 2 is a circuit diagram showing a conventional pulse signal discriminator;

- 5 -

Fig. 3 is an explanatory view showing pulse signals in mode C in a transponder;

Fig. 4 is a timing chart illustrating the operation of the conventional discriminator shown in Fig. 2; and

Fig. 5 is a timing chart indicating inconvenience in the case where signals are overlapped each other.

BEST MODE FOR EMBODYING THE INVENTION

In order to describe more fully the present invention, it will be described hereinbelow by referring to the accompanying drawings.

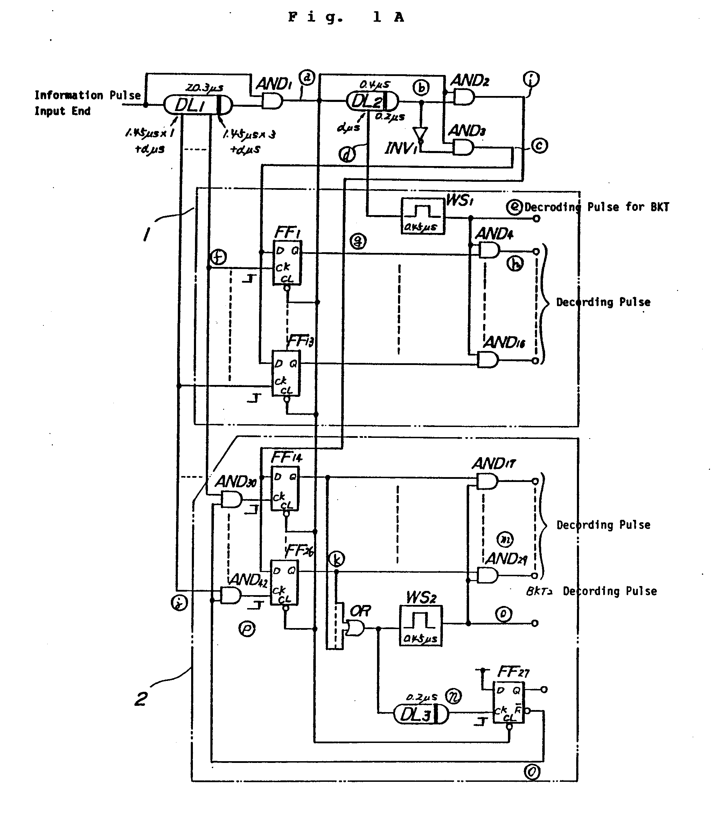

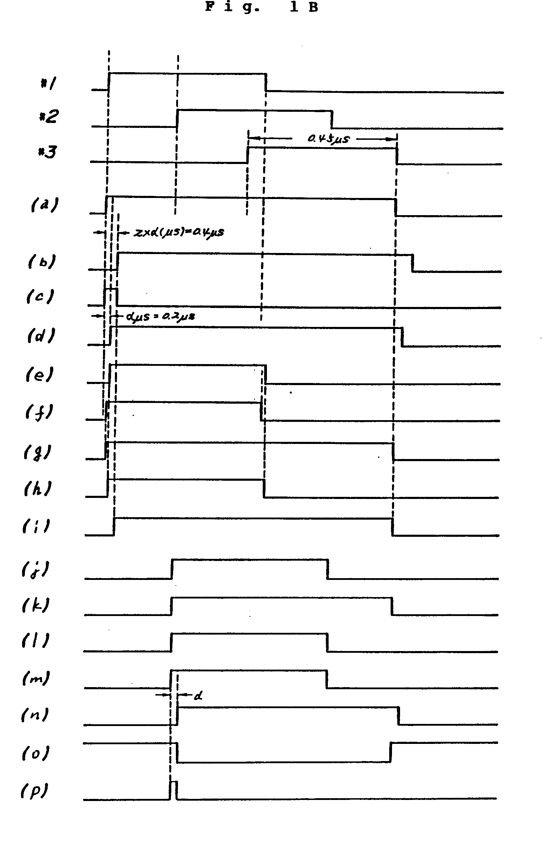

Fig. 1A is a circuit diagram illustrating an embodiment of the present invention wherein reference characters $DL_1$ and $AND_1$ designate 20.3 us delay circuit having thirteen intermediate output taps as in the case of the conventional circuit shown in Fig. 2 and AND gate, respectively. In this case, two signals of the output from said delay circuit $DL_1$ and said information pulse are applied to the $AND_1$ of said AND gate as the input. Furthermore output from the $AND_1$ of said AND gate is connected with a delay circuit $DL_2$ having two times longer delay time than that of allowable jitter time d (us) of information pulse to be handled and with each of either input ends of two of second and third AND gates, $AND_2$ and $AND_3$, at the same time, the output from said second delay circuit $DL_2$ is inputted to the other input end of said second AND gate $AND_2$, and the output from said delay circuit $DL_2$ is inputted to

the other input end of said third AND gate $AND_3$ through an invertor circuit $INV_1$, respectively.

In addition, there are provided suitable number (two in the present embodiment) of pulse decoding circuit blocks 1 and 2, and said number corresponding to that of such information pulse signal which is contemplated to discriminate and decode among overlapped incoming information signals.

These pulse decoding circuit blocks 1 and 2 have substantially the same construction with each other. First, the pulse decoding circuit block 1 will be described hereinbelow. The pulse decoding circuit block 1 comprises number corresponding to the pulse number of said information pulses, i.e., thirteen, in this case, of edge trigger flip flop circuits (ET.FF) $F.F_1$ through $F.F_{13}$, thirteen AND gates $AND_4$ through $AND_{16}$ to either of each input end of which is inputted each Q output from said ET.FF $F.F_1$ through $F.F_{13}$, and a waveform shaping circuit $WS_1$ as shown in Fig. 1A. Outputs from thirteen intermediate taps of said first delay circuit $DL_1$ are inputted at the clock input ends (CK) of said ET.FF $FF_1$ to $FF_{13}$ in response to 1 : 1 proportion, furthermore the output from said third AND gate $AND_3$ and the output from said first AND circuit $AND_1$ are commonly inputted to the data input end (D terminal) of said ET.FF and a clear terminal (CL), respectively. Q outputs of said ET.FF are inputted at one input end of each of thirteen AND gates $AND_4$ to $AND_{16}$ respectively,

and        intermediate tap outputs affording 1/2 delay time with

- 7 -

respect to that of said delay circuit $DL_2$, i.e., delay time of allowable jitter d (µs) from said second delay circuit $DL_2$ are inputted at another input end of each of aforesaid thirteen AND gates through said waveform shaping circuit $WS_1$ and at the same time the output of said waveform shaping circuit $WS_1$ as well as the outputs of said thirteen AND gates $AND_4$ to $AND_{16}$ are output as bracket decoding pulse $BKT_1$ for first information pulse signal and as decoding pulses $C_1, A_1, A_2, \ldots D_4$ for said information pulse signals, respectively.

On one hand, the second pulse decoding circuit block 2 comprises thirteen input OR circuits to which are inputted respective Q outputs of thirteen ET.FF $FF_{14}$ through $FF_{26}$, in addition to said thirteen ET.FF, thirteen AND gates $AND_{17}$ through $AND_{29}$ to either of each input end of which is inputted each Q output of said ET.FF, and a waveform shaping circuit $WS_2$ as in the case of said first pulse decoding circuit block 1. The outputs of said thirteen input OR circuits are inputted to said second waveform shaping circuit $WS_2$ and a third delay circuit $DL_3$. The output of said waveform shaping circuit $WS_2$ is made to be second bracket decoding pulse $BKT_2$, and at the same time the output is commonly inputted to each of another input end of said AND gates $AND_{17}$ through $AND_{29}$. Furthermore outputs obtained from the undermentioned construction are put out as information decoding pulses $C_1, A_1, A_2, \ldots D_4$ for the second information pulse. Said construction is such that the output from said third delay circuit $DL_3$ is inputted to a CK terminal of twenty-seventh ET.FF $FF_{27}$, the $\overline{Q}$ output therefrom is

- 8 -

inputted to either of input ends in each of thirteen AND gates $AND_{30}$ to $AND_{42}$ which are inserted into the preceeding stages to the respective CK terminals of said thirteen ET.FF $FF_{14}$ to $FF_{26}$, and at the same time, thirteen intermediate tap outputs from said first delay circuit $DL_1$ are connected to the other input end of each of said AND gates $AND_{30}$ to $AND_{42}$ in response to 1 : 1 proportion, whereby the outputs from said AND gates and the output from said second AND gate $AND_2$ are commonly inputted to the CK terminals of said ET.FF $FF_{14}$ to $FF_{26}$ and the D terminals of thirteen FF, respectively.

Operation of the discriminating circuit constructed as described above will be described in detail hereinbelow by referring to the time chart of Fig. 1B.

Fig. 1B is the time chart for explaining the operation of the circuit diagram shown in Fig. 1A and which illustrates waveforms in portions represented by the respective reference characters of Fig. 1A.

First, the case where three information pulses involving each little time difference are inputted to the input end of the first delay circuit $DL_1$ in Fig. 1A while they overlap each other will be studied.

When total three information pulse trains including #3 signal pulse with a little delay in addition to #1 and #2 signal pulses illustrated in Fig. 6 arrive, pulse (a) as shown in Fig. 1B is successively outputted at the output end of said first AND gate $AND_1$ as the sum of three bracket pulses #1, #2 and #3 in

- 9 -

Fig. 1B. The output signal of $AND_3$ is the product of signal (b) produced by passing said pulse (a) through said second delay circuit $DL_2$ as shown in Fig. 1B (b) and inverse logical value of said pulse (b) means of inverter $INV_1$, and the output pulse as above is a pulse having two times wider width than said allowable jitter d, i.e., having 0.4 us width in the present embodiment as illustrated at (c) in Fig. 1B. Such pulse of 2 x d (us) is to be commonly inputted to data terminals D of the ET.FF $FF_1$ to $FF_{13}$ in the first pulse decoding circuit block 1, while the clear terminals CL of said ET.FF are in "H" state by means of pulse (a), hence, so long as said waveform cf (c) is in "H" and the leading edge of pulse appears at the block terminals CK of said ET. FF circuits respectively, "H" state at Q output of said ET. FF continue until said clear terminals CL become "L".

Namely, such pulse of 2 x d (us) width being output pulse in said $AND_3$ is the one for partitioning and selecting only thirteen information pulses $C_1$, $A_1$, ... $D_4$ belonging to the first signal train #1, and said pulse is decided by means of delay time set value of said second delay circuit $DL_2$.

Thus, such signal pulses open the gates for only the allowable jitter time from the leading edge of the bracket pulse in said first signal #1 and these signal pulses to which belongs the signal #1 output with each successive delay at the respective intermediate taps of said first delay circuit $DL_1$ and which are inputted during said period of time continue while the waveform of (a) is in "H" state as shown at (g) in Fig. 1B. As

- 10 -

to the outputs from said $AND_4$ to $AND_{16}$ to which are inputted said signals outputs from $FF_1$ to $FF_{13}$ as well as the output of said waveform shaping circuit $WS_1$, i.e., the signal in (e) of Fig. 1B, when pulses exist at the positions of thirteen pulses $C_1$, $A_1$, ... $D_4$ belonging to said #1 signal, such output pulses having 0.45 μs pulse width is output with respect to such AND gate output corresponding to said pulses as shown in Fig. 1B (h). As a result, only the first signal #1 in the order of time can be extracted among a plurality of incoming signals which have overlapped each other.

Furthermore, the output from said second AND gate $AND_2$ is inputted at the input terminals D of the flip flop circuits $FF_{14}$ to $FF_{26}$ in said second pulse decoding circuit block 2 so that said $FF_1$ to $FF_{13}$ in said first pulse decoding circuit block 1 become inoperative state, at the same time the flip flops $FF_{14}$ to $FF_{26}$ in said second pulse decoding circuit block 2 become operable state, thereafter "H" states appear at the Q output end by means of the leading edge of such pulse to be inputted to the clock terminals (CK) in said flip flop circuits, and such condition continues until said FF are cleared.

On one hand, when "H" level is inputted to the OR circuit to which are inputted thirteen Q outputs from said $FF_{14}$ to $FF_{26}$ at least either of the input ends, "H" level signal pulse is inputted to the waveform shaping circuit $WS_2$ of the succeeding stage to produce bracket decoding pulse $BKT_2$ of 0.45 us width, and at the same time the output from said OR circuit OR which is delayed by

- 11 -

allowable jitter time d (= 0.2 us) by means of the third delay circuit $DL_3$, and it is inputted to the clock terminal of the flip flop circuit $FF_{27}$ for gate control. The resulting $\overline{Q}$ output is commonly connected with either of input ends of said AND gates $AND_{30}$ to $AND_{42}$ so that said thirteen AND gates become operative state during a period where said $\overline{Q}$ output is in "H".

Accordingly, as is apparent from the time chart relating to (i) through (p) in Fig. 1B, the operation in the above described respective parts is such that said second pulse decoding circuit block 2 allows that other information pulses pass during only such a period extending from the leading edge of the most advanced pulse in a specified pulse position of any one of thirteen information pulses $C_1$, $A_1$, ... $D_4$ belonging to the second signal #2 among overlapped incoming information signals to allowable jitter time d (= 0.2 us), so that only such pulses involving the leading edges within the allowable jitter time are extracted as the information pulses belonging to said signal #2.

Thus, two prior arriving signals #1 and #2 among #1 through #3 overlapped information pulses can independently be discriminated as mentioned above.

In order to extract the third signal #3, one more stage of the same pulse decoding circuit block as said second one may be provided, and the Q output from the flip flop $FF_{27}$ for gate control in said block 2 may be connected to D terminal of the flip flop circuit in said third block, so that the third signal #3 can be discriminated as in the case described above.

Likewise, when a number of the same blocks with said block 2 are connected in accordance with the same manner as that described above, arbitrary number of information signals can be discriminated respectively.

As described above, according to the present invention, when a plurality of incoming overlapped signals which are composed of pulse trains having a prescribed relative relation in positional relationship with respect to a reference pulse (bracket pulse of $F_1$ and $F_2$ in the above example) are discriminated, gates are successively opened for only a period of time starting from the pulse being said reference and terminating with allowable jitter to discriminate signals belonging to the pulse trains. As a result, even if a plurality of pulse trains are overlapped each other, they can correctly be distinguished one another.

Therefore, the present invention should not be limited to the above-mentioned example, but it will be apparent that, for example, either of said $F_1$ and $F_2$ may be used as the reference pulse, and either of the leading or trailing edge of the pulse may also be utilized as the reference.

In addition, it will also be apparent that the respective elements constructing the respective circuits are not limited to those mentioned in the above embodiment, any element having the same functions as those of the former may be used.

INDUSTRIALLY APPLICABLE FIELD

As described above, the pulse discriminating system for answer signals and the like in transponders according to the present invention makes possible such discrimination of a plurality of overlapped pulse signal trains which could not have been discriminated heretofore, besides the present system separates respectively these plural pulse signal trains to discriminate them. Thus, the present system is particularly suitable for such transponders mounted in aircraft which receive frequently overlapped answer signals and the like. In this respect, precision in discrimination can remarkably be improved by the pulse discriminating system according to the present invention.

CLAIM

A pulse discriminating system for answer signals and the like in transponder wherein there are a plurality of overlapped incoming pulse signals, and said pulse signals are composed of a reference pulse and number n of information pulses having a prescribed relation with said reference pulse from the viewpoint of time as in answer signals of transponder, comprising a means for discriminating only such pulse trains belonging to a first incoming signal from the viewpoint of time among said plural signals through a gate circuit which opens only for a prescribed period of time by means of the reference pulse of said first incoming signal, one or plural means for discriminating only each information pulse belonging to another incoming signal delayed a little from said first or the following incoming signal through another gate circuit which opens only for a prescribed period of time by means of said delayed information pulse, and at the same time each period of time for opening said respective gate circuits being set in relation to allowable jitter of each information pulse.

- 15 -

Information Pulse Input End

$DL1$  20.3μs  $AND_1$  ⓐ  0.4μs  ⓑ  $AND_2$  ①  $AND_2$

$0.2μs$

$1.45μsx1$  $+d μs$    $1.45μsx3$  $+d μs$    $d μs$    $INV_1$  $AND_3$  ⓒ

ⓓ

$WS_1$  ⓔ Decroding Pulse for BKT

$FF_1$  ③  $AND_4$

$D$  $Q$  ⓗ

$ck$

$CL$

Decording Pulse

$FF_{13}$

$D$  $Q$

$ck$

$CL$  $AND_{16}$

$FF_{14}$  $AND_{17}$

$AND_{30}$  $D$  $Q$

$ck$

$CL$  Decording Pulse

$FF_{26}$  ⓝ

$FF_{36}$  ⓚ  $AND_{29}$

$AND_{42}$  $D$  $Q$  BKT₂ Decording Pulse

ⓙ    $ck$

$CL$  $OR$  $WS_2$

ⓟ    $0.45μs$  ⓞ

$FF_{27}$

$0.2μs$  ⓝ  $D$  $Q$  $\bar{R}$

$DL3$  $ck$

$CL$

ⓞ

0211961

Fig. 1B

F i g.    2

Answer Signal

A

DL1

20.3 μs  Delay Circuit

1.4$μs×1

1.4$μs×3

Qa

BKT

Qb

Qn

Information
Pulse

F i g.    3

20.3μs

1.4$μs

a4$
μs

F1  C1  A1  C2  A2  C4  A4  X  B1  D1  B2  D2  B4  D4  F2

Fig. 4

20.3 μs

(a) Answer Pulse

(b) Tap 1

(c) Tap 2

(d) Tap 3

(e) Tap 12

(f) Tap 13

(g) Delay Circuit
OUT

Fig. 5

#1  F1  C1  A1  C2  F2

#2  F1  C1  A1  C2  F2

#3  F'1  C'1  A'1  C'2  F'2

0211961

# INTERNATIONAL SEARCH REPORT

International Application No. PCT/JP 86/00068

| I. CLASSIFICATION OF SUBJECT MATTER (if several classification symbols apply, indicate all) [3] |
|---|
| According to International Patent Classification (IPC) or to both National Classification and IPC |
| Int. Cl[4]    H04B1/59, G01S13/76 |

| II. FIELDS SEARCHED |
|---|

### Minimum Documentation Searched [4]

| Classification System | Classification Symbols |
|---|---|
| IPC | H04B1/59, G01S13/74 ~ 13/80, H04L25/38 |

### Documentation Searched other than Minimum Documentation to the Extent that such Documents are Included in the Fields Searched [5]

| | |
|---|---|
| Kokai Jitsuyo Shinan Koho | 1971 ~ 1985 |
| Jitsuyo Shinan Koho | 1926 ~ 1985 |

## III. DOCUMENTS CONSIDERED TO BE RELEVANT [14]

| Category[*] | Citation of Document, [16] with indication, where appropriate, of the relevant passages [17] | Relevant to Claim No. [18] |
|---|---|---|
| A | JP, B2, 50-40999 (Fuse Aircraft Company) 27. December. 1975 (27. 12. 75) FR, B1, 2090323 & IL, A1, 36712 | 1 |
| A | JP, A, 55-76966 (Hollandse Signaalapparaten B.V.) 10. June. 1980 (10. 06. 80) US, A, 4314247 & DE, A1, 2914934 & FR, A1, 2424547 & GB, A, 2020137 | 1 |
| A | JP, A, 49-50889 (Hikosaka Mitsuo) 17. May. 1974 (17. 05. 74) US, A, 3866221 | 1 |
| A | JP, A, 58-129278 (Nippon Electric Co., Ltd.) 2. August. 1983 (02. 08. 83) (Family: none) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION |
|---|

| Date of the Actual Completion of the International Search [2] | Date of Mailing of this International Search Report [2] |
|---|---|
| May 7, 1986 (07.05.86) | May 19, 1986 (19.05.86) |

| International Searching Authority [1] | Signature of Authorized Officer [20] |
|---|---|
| Japanese Patent Office (ISA/JP) | |

Form PCT/ISA/210 (second sheet) (October 1981)